# EUROPEAN PATENT SPECIFICATION

(11) **EP 2 221 405 B1**
(45) Date of publication and mention of the grant of the patent: **20.03.2013**
(21) Application number: 09250426.5
(22) Date of filing: 18.02.2009
(51) Int. Cl.: D03D 1/02, D03D 11/02, D03D 19/00

(54) **An airbag**
Airbag
Airbag

(43) Date of publication of application: 25.08.2010
(73) Proprietor: Autoliv Development AB, 44783 Vårgårda (SE)
(72) Inventor: Finn, Hugh, Culcheth Cheshire WA3 4LG (GB); Koehnen, Ralf, Congleton Cheshire CW12 4FJ (GB)
(74) Representative: Parry, Simon James

(56) References cited:
- WO-A-90/09295
- GB-A- 2 410 752

## Description

The present invention relates to an airbag of a type suitable for inflation in order to provide protection to an occupant of a motor vehicle in the event of accident involving the motor vehicle.

It is widely known to provide inflatable airbags within motor vehicles for inflation in the event of the motor vehicle being involved in a crash, thereby providing protection for an occupant of the motor vehicle. Such airbags are initially provided in the form of a tightly folded and/or rolled package provided within an airbag module mounted within the motor vehicle, and can take any of several forms depending upon its position in the vehicle and the type of impact for which it is intended to provide protection. Conventionally, airbags of this general type are manufactured from woven fabric, and typically comprise two or more layers of fabric which are interconnected by seams.

It is desirable to produce inflatable airbags which are highly flexible and light in weight, so that the airbags can be tightly packed into small packages whilst deploying in a fast and reliable manner when inflated upon receipt of an appropriate crash signal from a crash sensor. However, it is also important for such airbags to retain good technical properties such as tensile strength, seam strength and permeability.

It has been proposed previously to increase the flexibility of airbag fabrics whilst decreasing their weight by reducing the sett and cover factor of the fabric. As will be appreciated of those of skill in the textiles field, the sett of a fabric is a measure of the number of yarns which are present in a predetermined length of the fabric, as measured either transversely to the warp yarns or transversely to the weft yarns. The cover factor of a fabric represents a measure of the total proportion of an area of fabric which is occupied by the yarns, and effectively provides an indication of the size of the gaps provided between the yarns. A fabric which resembles a net, having relatively large gaps between its yarns, thus has a relatively low cover factor.

However, the sett and cover factor of an airbag fabric can only be reduced so far, before the fabric begins to lose structural integrity and as a result becomes unsuitable for use as a safety device. For example, reducing the sett and cover factor too far can result in a fabric which is easily distorted when subjected to the aggressive flow of an inflating gas, due to the warp and weft yarns sliding over one another resulting in localised holes. As will be appreciated, this sort of yarn slippage is undesirable in airbag fabrics. Also, slippage between the yarns of the fabric can also negatively affect the integrity of the seams formed between adjacent layers of the fabric in the airbag.

An airbag according to the preamble of claim 1 is known from GB-A-4 323 134.

It is therefore an object of the present invention to provide an improved airbag.

According to the present invention, there is provided an airbag comprising at least two fabric layers, each said layer comprising a plurality of warp yarns intercrossed with a plurality of weft yarns, the airbag being characterised by at least one of said layers being woven such that a first group of its warp yarns cross over one another between successive weft yarns, and such that a second group of its warp yarns are interwoven with yarns of the other layer in at least one selected region such that the two layers are combined to form a single layer in said selected region.

Preferably, said at least one layer is configured such that the warp yarns of said second group are interspersed amongst the warp yarns of said first group.

Conveniently, the warp yarns of said first group may have a different cross-sectional thickness than the yarns of said second group.

Alternatively, the warp yarns of said first group may have a cross-sectional thickness substantially equal to that of the yarns of said second group.

The warp yarns of said first group may have a different cross-sectional thickness than the weft yarns of said at least one layer.

Alternatively, the warp yarns of said first group may have a cross-sectional thickness substantially equal to that of the weft yarns of said at least one layer.

Conveniently, said at least one layer is configured such that between at least 50% of its warp-weft intercrossings, the warp yarns of said first group are crossed over one another.

Preferably, said at least one layer is configured such that between substantially all of its warp-weft intercrossings, the warp yarns of said first group cross over one another.

In preferred embodiments, the warp yarns of said first group are arranged in pairs, the warp yarns of each pair being intercrossed between each successive weft yarn of said at least one layer.

Conveniently, the warp yarns of each said pair are intercrossed by being twisted around one another between each successive weft yarn of said at least one layer.

Preferably, the warp yarns of each said pair are intercrossed by being twisted around one another once between each successive weft yarn of said at least one layer.

Alternatively, the warp yarns of each said pair may be intercrossed by being twisted around one another a plurality of times between each successive weft yarn of said at least one layer.

Conveniently, the warp yarns of each said pair may have a different cross-sectional thickness to one another.

Alternatively, the warp yarns of each said pair may have a substantially equal cross-sectional thickness.

Optionally, each of said layers may be woven such that a first group of its warp yarns cross over one another between successive weft yarns, and such that a second group of its warp yarns are interwoven with yarns of the other layer in at least one selected region such that the two layers are combined to form a single layer in said selected region.

So that the invention may be more readily understood, and so that further features thereof may be appreciated, embodiments of the invention will now be described by way of example with reference to the accompanying drawings in which:
Figure 1 is a diagrammatic view of part of an airbag;
Figure 2 is a partial plan view of an alternative configuration of airbags, being woven as part of a web of such airbags;
Figure 3 is a magnified view of a layer of fabric for use in an airbag in accordance with the invention;
Figure 4 is a magnified view of part of another layer of fabric for use in an airbag in accordance with the invention;
Figure 5 is a schematic illustration showing the manner in which the layers of fabric illustrated in figures 3 and 4 are interwoven in selected areas;
Figure 6 is a view corresponding generally to that of figure 5, but illustrating an alternative arrangement in which an airbag comprises two layers of fabric of a type illustrated in figure 3, showing the manner in which those layers are interwoven in selected areas.

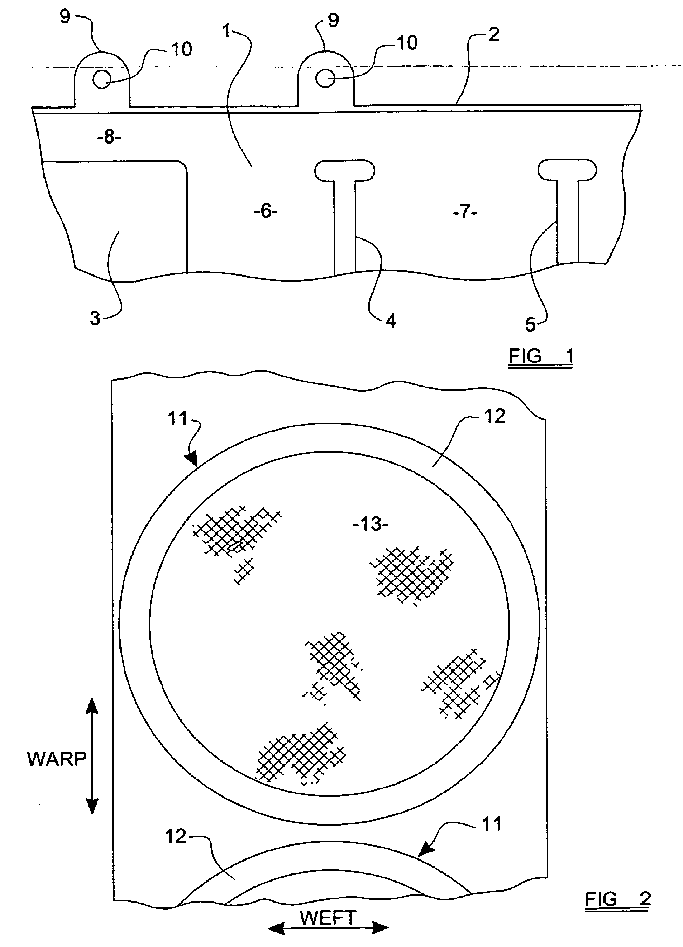

Turning now to consider figure 1 in more detail, there is illustrated part of an airbag provided in the form of a so-called inflatable curtain. Inflatable curtain airbags are now widely used to provide protection to the occupants of a motor vehicle in the event of a role over accident, and one such configuration of an inflatable curtain is disclosed in GB2297950A.

The airbag illustrated in figure 1 has an inflatable region 1 which has a generally linear upper edge 2. The inflatable region 1 is formed by two superimposed layers of fabric which are secured together at selected regions. As will be explained in more detail below, in accordance with the present invention, the airbag is formed using a one-piece weaving process, in which selected regions of the two layers of fabric are co-woven to form a single layer of fabric. In the part of the airbag shown in figure 1, the two layers of fabric of the inflatable region 1 are woven together in an area 3 in order to form a non-inflatable region of the airbag, and are also woven together in regions 4 and 5 which form seams separating individual inflatable cells 6 and 7. A gas supply duct 8 is defined which extends adjacent to the upper edge 2 of the airbag as is conventional. The gas supply duct 8 is provided in fluid communication with the inflatable cells 6, 7. The upper edge 2 of the airbag is provided with a plurality of protruding mounting tabs 9, each of which is provided with a mounting aperture 10. The mounting tabs 9 are used to mount the airbag in position, along the roof rail of a motor vehicle. The mounting tabs 9 may also be formed using the above-mentioned one-piece weaving process in which the two layers of fabric are co-woven to form a single thickness of fabric in the regions of the mounting tabs 9.

It is preferable to produce a plurality of airbags, each having the general construction described above and illustrated in figure 1, in the form of a single web which is woven on a loom. It should be appreciated, however, that the present invention is not limited to airbags of the inflatable curtain type described above and shown in Figure 1.

Figure 2 therefore illustrates part of a web of fabric which has been woven on a loom so as to comprise a plurality of substantially circular airbags, indicated generally at 11, which are suitable for use as driver airbags of the type typically provided as part of an airbag module mounted within the hub of a motor vehicle steering wheel. As in the case of the inflatable curtain airbag illustrated in figure 1, the circular airbags 11 are each produced by simultaneously weaving two layers of fabric, or plies, on a loom, the two layers being interwoven in selected areas 12. As can be seen, in this arrangement the selected areas are substantially circular and define the periphery of the individual airbags 11. Following weaving of the web, the individual airbags are removed from the web by cutting around the interwoven regions 12. The peripheral regions 12 thus define integral seams in which the two individual fabric layers are combined into a single fabric layer.

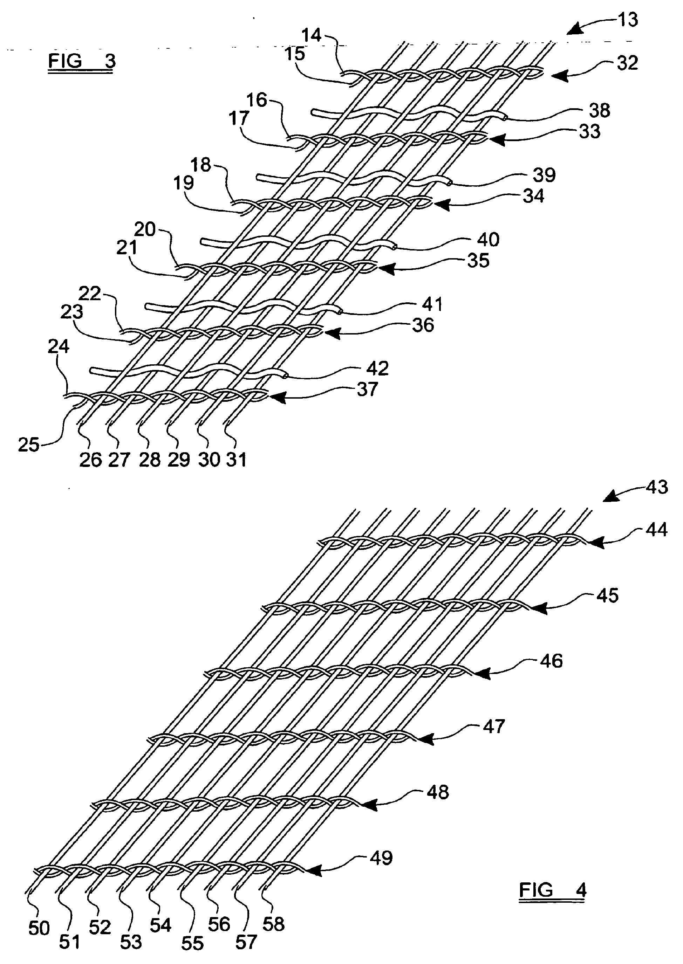

Figure 3 shows the structure of one layer of fabric 13 used to form the airbags of figures 1 and 2. The fabric is made up of a plurality of warp yarns 14-25, and a plurality of weft yarns 26-31. It can be seen that the warp yarns 14-25 are interwoven with the weft yarns 26-31 such that each warp yarn passes alternately above and below succeeding weft yarns. Furthermore, it can be seen that the warp yarns 14-25 effectively present six pairs of warp yarns 32-37. Thus; a first pair 32 comprises warp yarns 14 and 15; a second pair 33 comprises warp yarns 16 and 17; a third pair 34 comprises warp yarns 18 and 19; a fourth pair 35 comprises warp yarns 20 and 21; a fifth pair 36 comprises warp yarns 22 and 23; and a sixth pair 37 comprises warp yarns 24 and 25. Of course, it should be appreciated that the warp and weft yarns extend throughout the entire fabric in this manner.

Considering, for example, the warp yarns 14 and 15 of the first pair 32, it can be seen that the first weft yarn 26 passes above the warp yarn 14 and beneath the warp yarn 15. The warp yarns 14 and 15 are then twisted or reversed so that the warp yarn 14 moves to occupy the position initially occupied by the yarn 15, and the yarn 15 moves to occupy the position initially occupied by the yarn 14. The next weft yarn 27 thus passes above warp yarn 15 and beneath warp yarn 14. The positions of the warp and weft yarns 14 and 15 are then reversed again, the yarns thus being returned to their initial position with the warp yarn 14 located on top and the warp yarn 15 located beneath it. The next weft yarn 28 then passes beneath the warp yarn 15 and above the warp yarn 14. This process is repeated throughout the fabric, and it will be seen that the warp yarns of the other pairs extending throughout the fabric are also twisted, and hence crossed over one another, in the same manner between successive wefting yarns.

Thus, it is to be understood that in the first layer of the fabric 13, the warp yarns 14-25, in adjacent pairs, cross over one another between adjacent weft yarns.

Although the first layer of fabric 13 is described above and illustrated such that the warp yarns of each pair 32-37 are twisted once between successive weft yarns, it should be appreciated that in variants of the invention, the warp yarns of each pair may be twisted more than once between successive weft yarns. For example, considering again the warp yarns 14 and 15 of the first pair 32, the warp yarns could be twisted twice between successive weft yarns, in which case each successive weft yarn would effectively always pass beneath the same warp yarn and above the same warp yarn.

It will, of course, be noted that in the fabric illustrated in figure 3, the warp yarns cross one another between each successive weft yarn. However, variants of the invention are envisaged in which in some cases the warp yarns cross one another between adjacent weft yarns, whilst in other cases the warp yarns do not cross one another between adjacent weft yarns. In such a configuration, a percentage of the warp/weft inter-crossings will involve warp yarns being crossed or twisted in the manner illustrated in figure 3, whereas another percentage of the warp/weft inter-crossings will not involve the warp yarns being crossed or twisted as illustrated in figure 3. Preferably, however, at least 50% of the warp/weft inter-crossings will involve a warp crossing of the type illustrated in figure 3.

In addition to the first group of warp yarns 14-25 discussed above, which are twisted in pairs so as to cross one another, the first layer of fabric 13 also comprises a second group of warp yarns 38-42. As will be noted, each warp yarn 38-42 of the second group is interwoven with the weft yarns 26-31 so as to pass alternately under and over successive weft yarns and to follow a course substantially parallel to the warp yarns of the first group. As will also be noted, the warp yarns 38-42 of the second group are interspersed amongst the warp yarns 14-25 of the first group such that each successive warp yarn 38-42 runs between adjacent pairs 32-37 of the yarns forming the first group.

Although the warp yarns 38-42 of the second group are shown in figure 1 as being interwoven with the weft yarns 26-31 so as to pass alternately under and over successive weft yarns throughout the fabric, it is to be noted that in some embodiments of the invention there may be regions of the fabric in which the warp yarns 38-42 of the second group are not actually interwoven with the weft yarns in this manner.

It should also be appreciated at this juncture that the warp yarns 38-42 of the second group may or may not be of the same thickness as the individual warp yarns 14-25 of the first group. Similarly, although all of the warp yarns 14-25 of the first group are shown in figure 3 as having substantially equal thickness to one another, this need not be the case. For example, it is envisaged that in variants of the invention, the two warp yarns of each pair 32-37 could be configured so as to have different thicknesses to one another. Additionally, it is envisaged that the weft yarns 26-31 could either have a cross-sectional thickness substantially equal to all, seme, or even none of the individual warp yarns of each grouping

The manner in which the warp yarns 14-25 of the first group cross one another between the weft yarns 26 -31 serves to increase the stability of the first layer of fabric 13 which enables the sett and cover factor of the fabric to be reduced, thereby reducing the overall weight of the fabric, whilst still maintaining the desired properties of tensile strength and stability. The inter-crossed warp yarns of each pair 32-37 effectively serve to lock the warp yarns of the first group in position with respect to the weft yarns 26-31, thereby preventing slippage between the warp yarns and the weft yarns. The function of the warp yarns 38-42 of the second group will be explained in more detail below.

Figure 4 illustrates the construction of the second layer of fabric 43 used to construct the airbag of the present invention. As can easily be seen from comparison with figure 3, the second layer of fabric 43 has a substantially identical construction to the first layer of fabric 13, except for the fact that the second layer 43 does not include the second group of yarns 38-42. As will therefore be appreciated, the second layer of fabric 43 again comprises a plurality of warp yarns arranged into pairs 44-49, and a plurality of weft yarns 50-58. The individual warp yarns of each pair 44-49 are twisted around one another in a substantially identical manner to those of the first layer of fabric 13 illustrated in figure 3.

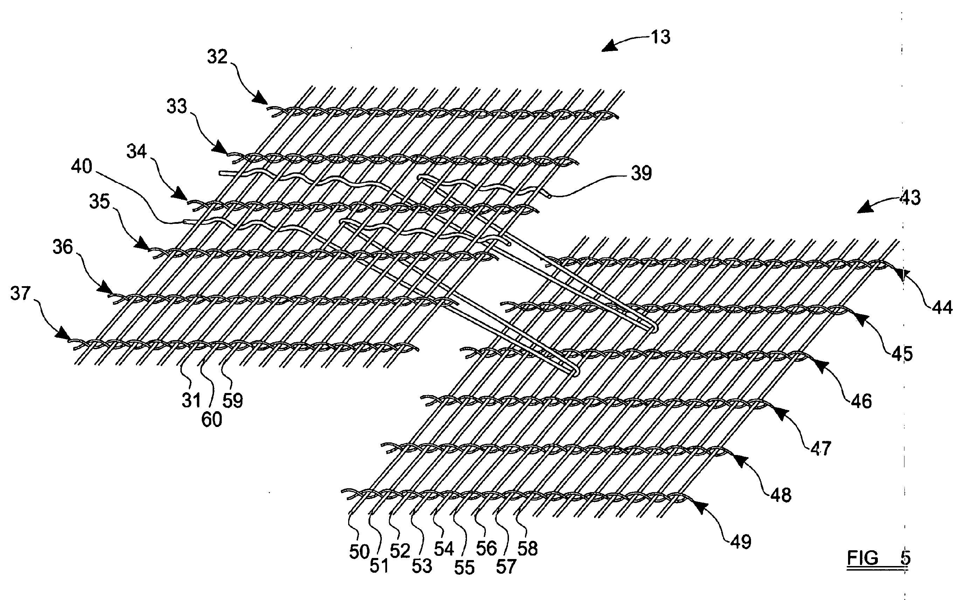

Figure 5 illustrates the two layers of fabric 13, 43 in combination, and in particular illustrates the manner in which the yarns of the two layers are interwoven in the aforementioned regions 3, 4, 5, 9 and 12 of the airbags illustrated in figures 1 and 2. It should be appreciated that the two layers of fabric 13, 43 are illustrated with significant separation in figure 5 for the sake of clarity, whereas in the actual woven structure of the present invention, the two layers will lie in intimate contact with one another.

As illustrated in figure 5, the yarns 38-42 of the second group forming the first fabric layer 13 are used to secure the two layers 13, 43 to one another in the aforementioned selected regions. For the sake of clarity, only two of the yarns 39, 40 of the second group of yarns making up the first layer 13 are illustrated. Focussing initially on the warp yarn 40 of the first fabric layer 13, it will be seen that the warp yarn 40 passes alternately under and over successive weft yarns of the first layer 13 as it runs from the left hand side of the drawing towards the right hand side. However, after passing over the weft yarn 31 of the first layer of fabric 13, the warp yarn 40 moves downwardly so as to pass underneath, and hence around, the weft yarn 55 of the second layer of fabric 43, whereafter the warp yarn 40 is redirected up wardly towards the upper layer of fabric 13 where it passes around the weft yarn indicated at 59, from where it then continues it's passage, alternately over and under successive weft yarns of the first layer 13. As will be noted, the warp yarn 40 thus effectively still passes under the weft yarn 60 lying between the weft yarn 31 and the weft yarn 59 but additionally passes beneath the generally adjacent weft yarn 55 of the second layer 43. The weft yarn 40, which represents a so-called float yarn, thus forms an integral part of the upper layer of fabric 13 but is also interwoven with the yarns of the second layer of fabric 43. It should be appreciated, that although only one passage of the warp yarn 40 around a weft yarn of the second layer of fabric 43 is illustrated in figure 5, the warp yarn 40 will make similar passages around weft yarns of the second layer of fabric 43 at predetermined positions along its path. Furthermore, the number of yarns of the first layer 13 through which the warp yarn 40 is woven between successive passes around weft yarns of lower layer of fabric 43 can vary, depending on the particular weave structure and strength of characteristics required, without departing from the scope of the present invention.

It should be appreciated that each of the warp yarns 38-42 of the second group making up the first layer of fabric 13 are interwoven with the weft yarns of the second layer of fabric 43 in a substantially identical manner to that described above with regard to the warp yarn 40. For example, the warp yarn 39 is illustrated in figure 5 making a similar pass around the weft yarn 57 of the second layer of fabric 43.

As will thus be appreciated, the first layer of fabric 13 comprises two distinct groups of warp yarns, both of which are interwoven with the weft yarns of the first layer 13. The warp yarns 14-25 of the first group are divided into pairs and arranged so as to cross one another between successive weft yarns, thereby locking tightly in position with regard to the weft yarns. The warp yarns 38-42 of the second group are also interwoven with the weft yarns of the first layer of fabric 13, but additionally, at predetermined positions along their path, are also interwoven with adjacent weft yarns of the second layer of fabric 43, and thereby serve to provide a structure in which the two layers of fabric 13, 43 are thus effectively co-woven in selected regions.

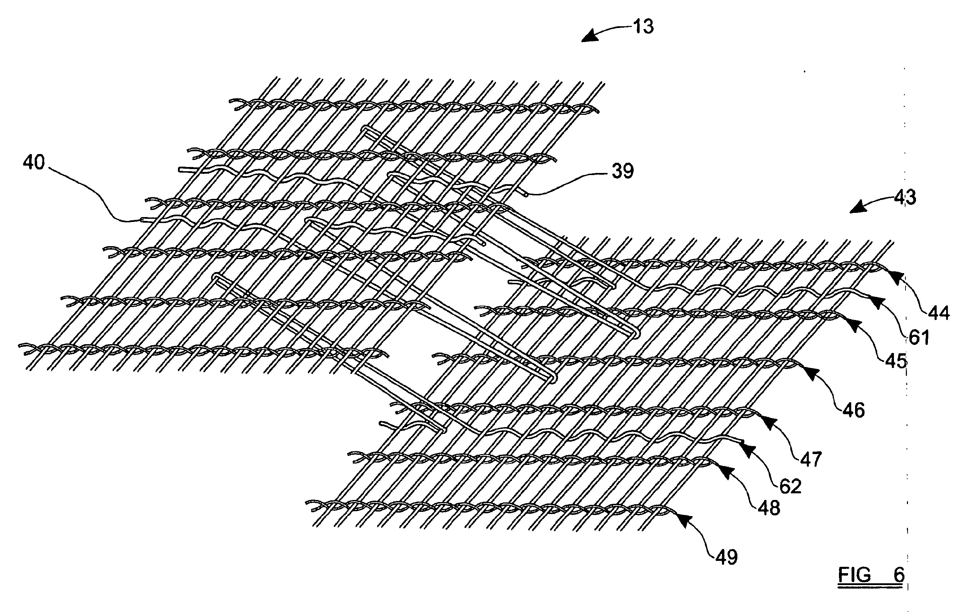

Whilst the present invention has been described above, and with particular reference to figure 5, in the context of an embodiment incorporating one layer of fabric having two distinct groups of yarns, and the other layer of fabric having only one group of yarns, it should be appreciated that in variants of the invention, both layers of fabric may comprise the aforementioned two distinct groups of warp yarns. For example, figure 6 illustrates a modified arrangement in which both the upper layer of fabric 13 and the lower layer of fabric 43 comprise a first group of warp yarns which cross over one another between successive weft yarns, and a second group of warp yarns which are interwoven with weft yarns of the other layer. The lower layer of fabric 43 can thus be seen in figure 6 to comprise a series of warp yarns (only two of which are indicated in figure 6 at 61 and 62) making up a second group of warp yarns in addition to the first group of warp yarns represented by the pairs 44-49. In a substantially identical manner to that in which the warp yarns 39, 40 of the upper layer 13 pass around weft yarns of the lower layer 43, the warp yarns 61, 62 of the lower layer 43 also extend upwardly at predetermined positions along their paths so as to pass around weft yarns of the upper layer 13. The arrangement of figure 6 thus provides a more tightly woven structure in the selected regions in which the two layers of fabric 13, 43 are co-woven into a single layer.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

When used in this specification and claims, the terms "comprises" and "comprising" and variations thereof mean that the specified features, steps or integers are included. The terms are not to be interpreted to exclude the presence of other features, steps or components.

## Claims

1. An airbag comprising at least two fabric layers (13,43), each said layer comprising a plurality of warp yarns intercrossed with a plurality of weft yarns, the airbag being **characterised by** at least one of said layers (13) being woven such that a first group of its warp yarns (14-25) cross over one another between successive weft yarns (26-31), and such that a second group of its warp yarns (38-42) are interwoven with yarns (57) of the other layer (43) in at least one selected region (2,3,4,5,9,12) such that the two layers (13,43) are combined to form a single layer in said selected region.

2. An airbag according to claim 1, wherein said at least one layer (13) is configured such that the warp yarns (38-42) of said second group are interspersed amongst the warp yarns (14-25) of said first group.

3. An airbag according to claim 1 or claim 2, wherein the warp yarns (14-25) of said first group have a different cross-sectional thickness than the yarns (38-42) of said second group.

4. An airbag according to claim 1 or claim 2, wherein the warp yarns (14-25) of said first group have a cross-sectional thickness substantially equal to that of the yarns (38-42) of said second group.

5. An airbag according to any preceding claim, wherein the warp yarns (14-25) of said first group have a different cross-sectional thickness than the weft yarns (26-31) of said at least one layer (13).

6. An airbag according to any one of claims 1 to 4, wherein the warp yarns (14-25) of said first group have a cross-sectional thickness substantially equal to that of the weft yarns (26-31) of said at least one layer (13).

7. An airbag according to any preceding claim, wherein said at least one layer (13) is configured such that between at least 50% of its warp-weft intercrossings, the warp yarns (14-25) of said first group are crossed over one another.

8. An airbag according to any preceding claim, wherein said at least one layer (13) is configured such that between substantially all of its warp-weft intercrossings, the warp yarns (14-25) of said first group cross over one another.

9. An airbag according to any preceding claim, wherein the warp yarns (14-25) of said first group are arranged in pairs (32-37), the warp yarns of each pair (32-37) being intercrossed between each successive weft yarn (26-31) of said at least one layer.

10. An airbag according to claim 9, wherein the warp yarns of each said pair (32-37) are intercrossed by being twisted around one another between each successive weft yarn (26-31) of said at least one layer.

11. An airbag according to claim 9 or claim 10, wherein the warp yarns of each said pair (32-37) are intercrossed by being twisted around one another a plurality of times between each successive weft yarn (26-31) of said at least one layer.

12. An airbag according to claim 9 or claim 10, wherein the warp yarns of each said pair (32-37) are intercrossed by being twisted around one another once between each successive weft yarn (26-31) of said at least one layer.

13. An airbag according to any one of claims 9 to 12, wherein the warp yarns of each said pair (32-37) have a different cross-sectional thickness to one another.

14. An airbag according to any one of claims 9 to 12, wherein the warp yarns of each said pair (32-37) have a substantially equal cross-sectional thickness.

15. An airbag according to any preceding claim, wherein each of said layers (13,43) are woven such that a first group of its warp yarns cross over one another between successive weft yarns, and such that a second group of its warp yarns are interwoven with yarns of the other layer in at least one selected region (3,4,5,9,12) such that the two layers (13,43) are combined to form a single layer in said selected region.

## Patentansprüche

1. Airbag, umfassend mindestens zwei Stoffschichten (13, 43), wobei jede Schicht eine Vielzahl von Kettfäden umfasst, die sich mit einer Vielzahl von Schussfäden kreuzen, wobei der Airbag **dadurch gekennzeichnet ist, dass** mindestens eine der Schichten (13) derart gewebt ist, dass eine erste Gruppe ihrer Kettfäden (14-25) zwischen aufeinanderfolgenden Schussfäden (26-31) einander überkreuzen, und derart, dass eine zweite Gruppe ihrer Kettfäden (38-42) mit Fäden (57) der anderen Schicht (43) in mindestens einem ausgewählten Bereich (2, 3, 4, 5, 9, 12) derart verwebt ist, dass die beiden Schichten (13, 43) kombiniert sind, um in dem ausgewählten Bereich eine einzige Schicht zu bilden.

2. Airbag nach Anspruch 1, wobei die mindestens eine Schicht (13) derart eingerichtet ist, dass die Kettfäden (38-42) der zweiten Gruppe zwischen den Kettfäden (14-25) der ersten Gruppe eingefügt sind.

3. Airbag nach Anspruch 1 oder Anspruch 2, wobei die Kettfäden (14-25) der ersten Gruppe eine andere Querschnittsdicke aufweisen als die Fäden (38-42) der zweiten Gruppe.

4. Airbag nach Anspruch 1 oder Anspruch 2, wobei die Kettfäden (14-25) der ersten Gruppe eine Querschnittsdicke aufweisen, die im Wesentlichen der der Fäden (38-42) der zweiten Gruppe entspricht.

5. Airbag nach einem vorhergehenden Anspruch, wobei die Kettfäden (14-25) der ersten Gruppe eine andere Querschnittsdicke aufweisen als die Schussfäden (26-31) der mindestens einen Schicht (13).

6. Airbag nach einem der Ansprüche 1 bis 4, wobei die Kettfäden (14-25) der ersten Gruppe eine Querschnittsdicke aufweisen, die im Wesentlichen der der Schussfäden (26-31) der mindestens einen Schicht (13) entspricht.

7. Airbag nach einem vorhergehenden Anspruch, wobei die mindestens eine Schicht (13) derart eingerichtet ist, dass zwischen mindestens 50% ihrer Kette-Schuss-Kreuzungspunkte die Kettfäden (14-25) der ersten Gruppe einander überkreuzt sind.

8. Airbag nach einem vorhergehenden Anspruch, wobei die mindestens eine Schicht (13) derart eingerichtet ist, dass zwischen im Wesentlichen allen ihrer Kette-Schuss-Kreuzungspunkte die Kettfäden (14-25) der ersten Gruppe einander überkreuzt sind.

9. Airbag nach einem vorhergehenden Anspruch, wobei die Kettfäden (14-25) der ersten Gruppe als Paare (32-37) angeordnet sind, wobei die Kettfäden jedes Paars (32-37) zwischen jedem aufeinanderfolgenden Schussfaden (26-31) der mindestens einen Schicht gekreuzt sind.

10. Airbag nach Anspruch 9, wobei die Kettfäden jedes Paars (32-37) gekreuzt sind, indem sie zwischen jedem aufeinanderfolgenden Schussfaden (26-31) der mindestens einen Schicht umeinander gedreht sind.

11. Airbag nach Anspruch 9 oder Anspruch 10, wobei die Kettfäden jedes Paars (32-37) gekreuzt sind, indem sie zwischen jedem aufeinanderfolgenden Schussfaden (26-31) der mindestens einen Schicht mehrere Male umeinander gedreht sind.

12. Airbag nach Anspruch 9 oder Anspruch 10, wobei die Kettfäden jedes Paars (32-37) gekreuzt sind, indem sie zwischen jedem aufeinanderfolgenden Schussfaden (26-31) der mindestens einen Schicht einmal umeinander gedreht sind.

13. Airbag nach einem der Ansprüche 9 bis 12, wobei die Kettfäden jedes Paars (32-37) zueinander eine unterschiedliche Querschnittsdicke aufweisen.

14. Airbag nach einem der Ansprüche 9 bis 12, wobei die Kettfäden jedes Paars (32-37) eine im Wesentlichen gleiche Querschnittsdicke aufweisen.

15. Airbag nach einem vorhergehenden Anspruch, wobei jede der Schichten (13, 43) derart gewebt ist, dass eine erste Gruppe ihrer Kettfäden zwischen aufeinanderfolgenden Schussfäden einander überkreuzen, und derart, dass eine zweite Gruppe ihrer Kettfäden mit Fäden der anderen Schicht in mindestens einem ausgewählten Bereich (3, 4, 5, 9, 12) derart verwebt ist, dass die beiden Schichten (13, 43) kombiniert sind, um in dem ausgewählten Bereich eine einzige Schicht zu bilden.

## Revendications

1. Airbag comprenant au moins deux couches de tissu (13, 43), chaque dite couche comprenant une pluralité de fils de chaîne entrecroisés avec une pluralité de fils de trame, l'airbag étant **caractérisé en ce qu'**au moins l'une desdites couches (13) est tissée de sorte qu'un premier groupe de ses fils de chaîne (14-25) se croisent les uns les autres entre des fils de trame (26-31) successifs, et de sorte qu'un second groupe de ses fils de chaîne (38-42) sont entrelacés avec des fils (57) de l'autre couche (43) dans au moins une zone sélectionnée (2, 3, 4, 5, 9, 12) de sorte que les deux couches (13, 43) sont combinées pour former une couche unique dans ladite zone sélectionnée.

2. Airbag selon la revendication 1, dans lequel ladite au moins une couche (13) est configurée de sorte que les fils de chaîne (38-42) dudit second groupe sont entremêlés parmi les fils de chaîne (14-25) dudit premier groupe.

3. Airbag selon la revendication 1 ou la revendication 2, dans lequel les fils de chaîne (14-25) dudit premier groupe présentent une épaisseur de section différente des fils (38-42) dudit second groupe.

4. Airbag selon la revendication 1 ou la revendication 2, dans lequel les fils de chaîne (14-25) dudit premier groupe présentent une épaisseur de section essentiellement égale à celle des fils (38-42) dudit second groupe.

5. Airbag selon une quelconque revendication précédente, dans lequel les fils de chaîne (14-25) dudit premier groupe présentent une épaisseur de section différente des fils de trame (26-31) de ladite au moins une couche (13).

6. Airbag selon l'une quelconque des revendications 1 à 4, dans lequel les fils de chaîne (14-25) dudit premier groupe présentent une épaisseur de section essentiellement égale à celle des fils de trame (26-31) de ladite au moins une couche (13).

7. Airbag selon une quelconque revendication précédente, dans lequel ladite au moins une couche (13) est configurée de sorte qu'entre au moins 50 % de ses entrecroisements chaîne-trame, les fils de chaîne (14-25) dudit premier groupe sont croisés les uns avec les autres.

8. Airbag selon une quelconque revendication précédente, dans lequel ladite au moins une couche (13) est configurée de sorte qu'entre essentiellement tous ses entrecroisements chaîne-trame, les fils de chaîne (14-25) dudit premier groupe se croisent les uns les autres.

9. Airbag selon une quelconque revendication précédente, dans lequel les fils de chaîne (14-25) dudit premier groupe sont disposés en paires (32-37), les fils de chaîne de chaque paire (32-37) étant entrecroisés entre chaque fil de trame (26-31) successif de ladite au moins une couche.

10. Airbag selon la revendication 9, dans lequel les fils de chaîne de chaque dite paire (32-37) sont entrecroisés en étant torsadés les uns autour des autres entre chaque fil de trame (26-31) successif de ladite au moins une couche.

11. Airbag selon la revendication 9 ou la revendication 10, dans lequel les fils de chaîne de chaque dite paire (32-37) sont entrecroisés en étant torsadés les uns autour des autres une pluralité de fois entre chaque fil de trame (26-31) successif de ladite au moins une couche.

12. Airbag selon la revendication 9 ou la revendication 10, dans lequel les fils de chaîne de chaque dite paire (32-37) sont entrecroisés en étant torsadés les uns autour des autres une fois entre chaque fil de trame successif (26-31) de ladite au moins une couche.

13. Airbag selon l'une quelconque des revendications 9 à 12, dans lequel les fils de chaîne de chaque dite paire (32-37) présentent une épaisseur de section différente l'un de l'autre.

14. Airbag selon l'une quelconque des revendications 9 à 12, dans lequel les fils de chaîne de chaque dite paire (32-37) présentent une épaisseur de section essentiellement égale.

15. Airbag selon une quelconque revendication précédente, dans lequel chacune desdites couches (13, 43) est tissée de sorte qu'un premier groupe de ses fils de chaîne se croisent les uns les autres entre des fils de trame successifs, et de sorte qu'un second groupe de ses fils de chaîne sont entrelacés avec des fils de l'autre couche dans au moins une zone sélectionnée (3, 4, 5, 9, 12) de sorte que les deux couches (13, 43) sont combinées pour former une couche unique dans ladite zone sélectionnée.
